# FASCICULE DE BREVET EUROPEEN

(11) **EP 1 440 880 B1**
(45) Date de publication et mention de la délivrance du brevet: **07.12.2005**
(21) Numéro de dépôt: 03291893.0
(22) Date de dépôt: 30.07.2003
(51) Int. Cl.: B64C 13/00, B64C 9/06

(54) **Procédé et système de commande d'une gouverne d'aéronef**
Verfahren und Vorrichtung zur Ansteuerung von Flugzeugrudern
Method and system for actuating aircraft control surfaces

(30) Priorité: 21.01.2003 FR 0300612
(43) Date de publication de la demande: 28.07.2004
(73) Titulaire: AIRBUS France, 31060 Toulouse (FR)
(72) Inventeur: Cassein, Guillaume, Bât. A1, Apt 26, 31300 Toulouse (FR); van de Kreeke, Marc, 31490 Leguevin (FR)
(74) Mandataire: Hauer, Bernard

(56) Documents cités:
- EP-A- 0 978 777
- FR-A- 978 031
- FR-A- 2 809 373
- US-A- 4 146 200
- US-A- 4 796 192
- US-A- 6 161 801

## Description

La présente invention concerne un procédé et un système de commande d'une gouverne d'un aéronef, en particulier d'un avion de transport, ladite gouverne étant montée sur un élément stabilisateur dudit aéronef.

Afin d'améliorer les performances (consommation de carburant, niveau de bruit, ...) d'un aéronef, sans diminuer la charge utile transportée, les constructeurs sont amenés à diminuer le plus possible la masse de l'aéronef, c'est-à-dire la masse de la structure, d'organes, d'équipements, ... dudit aéronef. A cet effet, il peut être intéressant de diminuer la masse d'éléments stabilisateurs tels que la dérive, un stabilisateur horizontal ou une voilure par exemple.

On sait qu'un élément stabilisateur d'un aéronef est dimensionné en tenant compte des efforts maximaux auxquels il est susceptible d'être soumis lors des différentes configurations de vol de cet aéronef. Par conséquent, pour limiter la masse d'un tel élément stabilisateur et donc également la masse de l'aéronef, une solution est de réduire les efforts auxquels cet élément stabilisateur est susceptible d'être soumis au cours d'un vol.

A cet effet, on connaît par exemple par le document FR-2 809 373 de la demanderesse, un système de commande électrique pour une gouverne de direction d'un aéronef, grâce auquel il est possible de limiter les charges latérales appliquées en manoeuvre sur ladite gouverne de direction et donc de réduire le dimensionnement et la masse de cette dernière, sans pour autant réduire les qualités de vol de l'aéronef ou la sécurité de vol.

Pour ce faire, ledit système de commande connu comporte :
- un palonnier actionné par le pilote et associé à un transducteur délivrant un ordre électrique de pilotage représentatif de l'action du pilote sur ledit palonnier ;
- un actionneur recevant un ordre de commande dérivé dudit ordre de pilotage et déplaçant ladite gouverne de direction autour de son axe de rotation ; et
- entre ledit palonnier et ledit actionneur, des moyens de filtrage du type passe-bas recevant ledit ordre de pilotage dudit transducteur et engendrant ledit ordre de commande pour ledit actionneur, la constante de temps desdits moyens de filtrage étant d'autant plus élevée que l'amplitude dudit ordre de pilotage correspond à une fraction plus grande de la valeur maximale de débattement de la gouverne de direction.

Ainsi, ce système de commande connu introduit, dans les ordres de pilotage au palonnier, un filtrage non linéaire qui dépend du débattement disponible pour la gouverne de direction, ce filtrage étant d'autant plus important que ladite gouverne de direction s'approche des butées limitant le débattement maximal, ce qui limite les charges appliquées à ladite gouverne et permet donc de réduire le dimensionnement et la masse de cette dernière.

Ce système de commande connu présente toutefois un inconvénient important, notamment lorsqu'il est appliqué à un avion de transport gros porteur. En effet, ce système connu nécessite un actionneur puissant et très coûteux pour pouvoir déplacer la gouverne, en raison des forces très élevées à laquelle cette dernière est soumise notamment sur un avion lourd.

La présente invention a pour objet de remédier à ces inconvénients. Elle concerne un procédé pour commander une gouverne d'un aéronef de manière à réduire les efforts induits auxquels est soumis un élément stabilisateur dudit aéronef, sur lequel est montée ladite gouverne.

Un procédé visant à réduire les efforts sur une aile d avion est connu du document US-A-4796192. Le procédé diffère de la présente invention en ce qu'on réduit l'angle de braquage de l'élément de gouverne qui crée l'effort le plus élevé lors d'une phase particulière de l'aéronef pour laquelle un seuil limite des efforts sur l'aile est susceptible d'être dépassé.

Le procédé selon l'invention est remarquable en ce que l'on réalise ladite gouverne sous forme d'au moins deux éléments de gouverne commandables, chacun desdits éléments de gouverne étant monté rotatif autour d'un axe pour pouvoir prendre n'importe quel angle de braquage à l'intérieur d'une plage de débattement, conformément à une commande, et en ce que lesdits éléments de gouverne sont susceptibles d'être commandés de façon différenciée.

Comme on prévoit au moins ainsi deux actionneurs pour déplacer la gouverne (un actionneur par élément de gouverne de ladite gouverne), on peut utiliser des actionneurs moins puissants et donc moins encombrants, moins lourds et surtout moins coûteux.

Pour au moins une phase de vol particulière de l'aéronef, on commande en priorité un premier desdits éléments de gouverne qui engendre un effort sur ledit élément stabilisateur qui est plus faible que l'effort engendré par le second élément de gouverne pour un même angle de braquage desdits premier et second éléments de gouverne.

Ainsi, grâce à l'invention, on commande l'élément de gouverne permettant d'engendrer l'effort le plus faible sur l'élément stabilisateur, et ceci au moins dans ladite phase de vol particulière. De préférence, ladite phase de vol particulière de l'aéronef est une phase de vol pour laquelle l'effort appliqué sur ledit élément stabilisateur est très élevé et est supérieur à un seuil d'effort qui correspond à un pourcentage prédéterminé d'un effort maximal dudit élément stabilisateur. Ainsi, grâce à la présente invention, on réduit les efforts élevés (maximaux) qui sont susceptibles d'être appliqués à l'élément stabilisateur, ce qui permet de réduire le dimensionnement et la masse de ce dernier.

Dans une variante de réalisation, on commande avec retard un second desdits éléments de gouverne qui engendre un effort sur ledit élément stabilisateur qui est plus élevé que l'effort engendré par un premier élément de gouverne pour un même angle de braquage desdits premier et second éléments de gouverne.

Dans un mode de réalisation préféré de la présente invention, on définit :
- un premier mode de commande, pour lequel on commande de manière identique les (au moins) deux éléments de gouverne ; et
- un second mode de commande, pour lequel on commande de manière différenciée les (au moins) deux éléments de gouverne,
et, pendant tout le vol de l'aéronef, on met en oeuvre ledit premier mode de commande, à l'exception de ladite phase de vol particulière pour laquelle on met en oeuvre ledit second mode de commande.

Ce mode de réalisation préféré permet :
- d'une part, de limiter les efforts appliqués à l'élément stabilisateur, en mettant en oeuvre, lorsque cela s'avère nécessaire, ledit second mode de commande, pour lequel on commande essentiellement, ou même exclusivement selon les situations, l'élément de gouverne qui engendre l'effort le plus faible sur ledit élément stabilisateur ; et
- d'autre part, de réduire la fatigue et le vieillissement desdits éléments de gouverne, en mettant toujours en oeuvre en fonctionnement normal et habituel (donc hormis la phase de vol particulière précitée et explicitée ci-dessous à partir d'exemples de réalisation particuliers de l'invention) ledit premier mode de commande, pour lequel les éléments de gouverne sont commandés de manière identique, ce qui permet de répartir sur l'ensemble desdits éléments de gouverne les différents efforts et ainsi de réduire la fatigue correspondante.

Dans un mode de réalisation, pour un élément stabilisateur correspondant à un stabilisateur horizontal, et une gouverne comportant au moins un élément de gouverne interne et un élément de gouverne externe (par rapport à l'axe longitudinal de l'aéronef), on met en oeuvre ledit second mode de commande pour lequel on commande en priorité ledit élément de gouverne interne, lorsque l'un des cas A et B suivants se présente :
A/ l'aéronef est centré vers l'avant et la gouverne est braquée vers le haut ;
B/ l'aéronef est centré vers l'arrière et les conditions suivantes sont simultanément vérifiées :
   a) le sens de braquage souhaité de la gouverne s'oppose au mouvement de l'aéronef ;
   b) la valeur absolue du facteur de charge de l'aéronef est supérieure à une valeur prédéterminée ; et
   c) l'aéronef est en configuration lisse.

Dans une variante de l'invention, ledit cas A se présente lorsque, en plus des conditions précitées, la condition suivante α est de plus vérifiée : l'aéronef est en configuration lisse.

Dans une autre variante de l'invention, ledit cas A se présente lorsque, en plus des conditions précitées, la condition suivante β est de plus vérifiée : la vitesse de débattement d'un organe de commande de l'aéronef, par exemple un minimanche, est supérieure à une valeur prédéterminée. Cette valeur prédéterminée peut, par exemple, être choisie égale à la moitié de la vitesse maximale de débattement de l'organe de commande. L'ajout de cette condition β permet de ne pas impacter le domaine de vol courant de l'aéronef par l'activation du second mode de commande de la gouverne. En effet, une valeur élevée de ladite vitesse de débattement de l'organe de commande correspond généralement à des efforts élevés sur la gouverne, que l'on souhaite réduire par l'activation dudit second mode de commande.

De plus, dans une variante, ledit cas A se présente lorsque, en plus des conditions citées en premier (l'aéronef est centré vers l'avant et la gouverne est braquée vers le haut), les conditions α et β précédentes sont également vérifiées (simultanément).

En outre, dans ledit cas B, avantageusement :
- la condition a) est vérifiée, lorsque le signe du produit du facteur de charge vertical et de l'angle de braquage est positif ; et/ou
- la condition b) est vérifiée, de préférence, lorsque le facteur de charge vertical est supérieur à + 1,5 g ou inférieur à -0,5 g, g étant l'accélération de la pesanteur ; et/ou
- la condition c) est vérifiée, lorsqu'aucun dispositif sustentateur usuel de l'aéronef n'est activé.

Par ailleurs, dans un autre mode de réalisation, pour un élément stabilisateur correspondant à une dérive, et une gouverne comportant au moins un élément de gouverne supérieur et un élément de gouverne inférieur, on met en oeuvre ledit second mode de commande pour lequel on commande en priorité ledit élément de gouverne inférieur, lorsque le produit Fδ.Fβ est inférieur à zéro, Fδ et Fβ étant les forces aérodynamiques qui sont exercées sur ladite dérive en raison respectivement du braquage de la gouverne et du dérapage.

En outre, en variante ou en complément, pour un élément stabilisateur correspondant à une dérive, et une gouverne comportant au moins un élément de gouverne supérieur et un élément de gouverne inférieur, on met en oeuvre ledit second mode de commande pour lequel on commande en priorité ledit élément de gouverne supérieur, lorsque les deux conditions suivantes sont vérifiées simultanément :
- le produit Fδ.Fβ est supérieur à zéro, Fδ et Fβ étant les forces aérodynamiques qui sont exercées sur ladite dérive en raison respectivement du braquage de la gouverne et du dérapage ; et
- la valeur absolue de l'angle de dérapage est supérieure à une valeur prédéterminée, par exemple à la moitié de la valeur absolue de l'angle de braquage de la gouverne.

Par ailleurs, dans un mode de réalisation particulier, on réalise ladite gouverne sous forme d'au moins trois éléments de gouverne commandables et on commande lesdits éléments de gouverne par groupes de priorité, chacun desdits groupes de priorité comportant à chaque fois au moins un élément de gouverne.

Selon l'invention, tous les types de commande possibles sont envisageables dans ce cas : par exemple commander tous les éléments de gouverne séparément selon un ordre de priorité particulier, commander uniquement un élément de gouverne dans ledit second mode de commande, ou en commander deux, ...

Par ailleurs, avantageusement, on applique des filtrages aux commandes desdits éléments de gouverne et on applique des filtrages différents aux commandes respectivement desdits différents éléments de gouverne.

La présente invention concerne également un système de commande électrique d'une gouverne d'aéronef, du type comportant :
- une unité de commande qui comprend au moins un organe de commande susceptible d'être actionné par un pilote et qui délivre un ordre de braquage global représentatif au moins de l'action exercée par le pilote sur ledit organe de commande ; et
- un actionneur qui déplace ladite gouverne en fonction d'un ordre de braquage reçu.

Selon l'invention, ledit système est remarquable en ce que :
- ladite gouverne comporte au moins deux éléments de gouverne, chacun desdits éléments de gouverne étant monté rotatif autour d'un axe pour pouvoir prendre n'importe quel angle de braquage à l'intérieur d'une plage de débattement ;
- ledit actionneur comporte au moins deux moyens d'actionnement, chacun desdits moyens d'actionnement étant associé à l'un desdits éléments de gouverne et étant susceptible de déplacer ledit élément de gouverne associé en fonction d'un ordre de braquage individuel reçu ; et
- ledit système comporte de plus :
   . des premiers moyens pour déterminer une phase de vol particulière de l'aéronef ; et
   . des seconds moyens qui sont agencés entre ladite unité de commande et lesdits moyens d'actionnement et qui, lorsque ladite phase de vol particulière est déterminée par lesdits premiers moyens, engendrent, en fonction de l'ordre de braquage global reçu de l'unité de commande, des ordres de braquage individuels différenciés pour lesdits moyens d'actionnement, par exemple, de manière à commander en priorité l'élément de gouverne qui engendre l'effort le plus faible sur ledit élément stabilisateur.

De façon avantageuse, lesdits premiers moyens comportent des capteurs pour mesurer les valeurs de différents paramètres, et une unité de calcul pour déterminer, à partir des valeurs mesurées par lesdits capteurs, ladite phase de vol particulière. Comme de tels capteurs existent déjà, en général, sur la plupart des aéronefs, et notamment sur les avions de transport, le système conforme à l'invention est simple à réaliser et peu coûteux.

Les figures du dessin annexé feront bien comprendre comment l'invention peut être réalisée. Sur ces figures, des références identiques désignent des éléments semblables.
La figure 1 est le schéma synoptique d'un système de commande conforme à l'invention.
La figure 2 montre un avion de transport auquel on applique, à titre d'exemple, un système de commande conforme à l'invention.
La figure 3 montre une gouverne de direction montée sur une dérive et réalisée conformément à un mode de réalisation particulier de l'invention.
La figure 4 montre des gouvernes montées sur des stabilisateurs horizontaux et réalisées conformément à un mode de réalisation particulier de l'invention.
La figure 5 est une vue agrandie d'une partie de la figure 4 montrant une gouverne montée sur un stabilisateur horizontal.

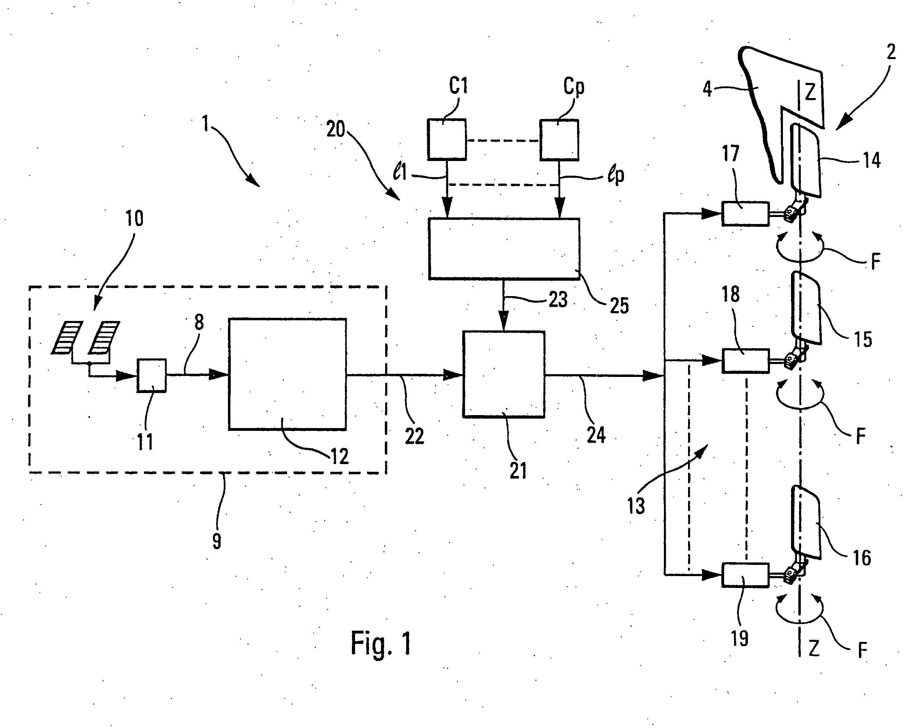

Le système de commande électrique 1, conforme à la présente invention et représenté sur la figure 1, est destiné à l'actionnement d'une gouverne 2 d'un aéronef 3, qui est montée sur un élément stabilisateur 4 représenté partiellement dudit aéronef 3.

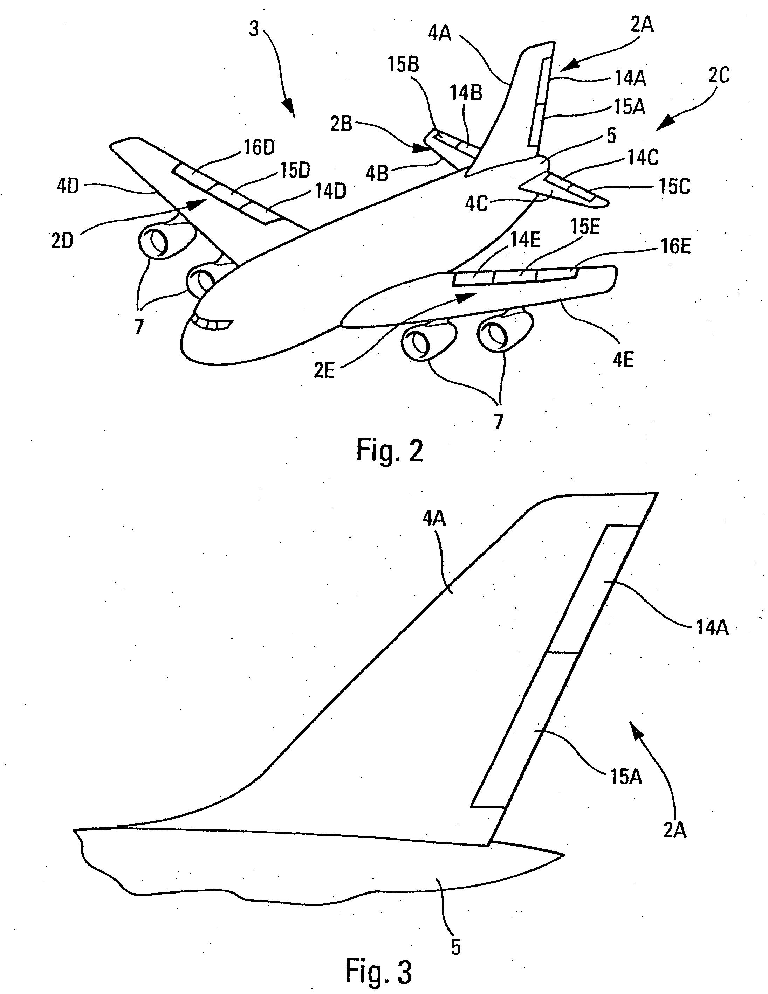

Comme on peut le voir à l'exemple d'un avion de transport 3 représenté sur la figure 2, ladite gouverne 2 peut être, dans le cadre de la présente invention, notamment :
- une gouverne de direction 2A qui est montée sur une dérive 4A (élément stabilisateur) ;
- l'une des gouvernes de profondeur 2B, 2C qui sont montées sur des stabilisateurs horizontaux 4B, 4C (éléments stabilisateurs) prévus à l'arrière de l'avion 3 au niveau de la queue 5 ; et
- l'une des gouvernes latérales 2D, 2E qui sont prévues sur les ailes 4D, 4E (éléments stabilisateurs) de l'avion 3, munies de moteurs 7.

Ledit système de commande électrique 1 est du type connu, comportant :
- une unité de commande 9 qui comprend :
   . un organe de commande 10, par exemple un palonnier ou un minimanche, qui est susceptible d'être actionné par un pilote de l'aéronef, et qui est associé à un transducteur 11 délivrant un ordre électrique de commande (relatif au braquage de la gouverne 2) représentatif de l'actionnement dudit organe de commande 10 ; et
   . un moyen de calcul 12 qui est relié par une liaison 8 audit transducteur 11 et qui délivre un ordre de braquage global représentatif, au moins, de l'action exercée par le pilote sur ledit organe de commande 10 ; et
- un actionneur 13 qui déplace ladite gouverne 2, en fonction d'un ordre de braquage reçu.

Selon l'invention :
- ladite gouverne 2 comporte au moins deux éléments de gouverne 14, 15, 16, chacun desdits éléments de gouverne 14, 15, 16 étant monté rotatif dans les deux sens autour d'un axe Z-Z de la façon symbolisée par une double flèche F pour pouvoir prendre n'importe quel angle de braquage à l'intérieur d'une plage de débattement. Comme illustré par des tirets entre les éléments de gouverne 15 et 1 6 sur la figure 1, ladite gouverne 2 peut prendre selon l'invention un nombre n quelconque (deux, trois, quatre, ...) d'éléments de gouverne, n étant un entier supérieur ou égal à 2 ;
- ledit actionneur 13 comporte au moins deux moyens d'actionnement 17, 18, 19, chacun desdits moyens d'actionnement 17, 18, 19 étant associé à l'un desdits éléments de gouverne 14, 15, 16 et étant susceptible de déplacer ledit élément de gouverne associé en fonction d'un ordre de braquage individuel reçu ; et
- ledit système 1 comporte de plus :
   . des moyens 20 pour déterminer au moins une phase de vol particulière de l'aéronef, précisée ci-dessous ; et
   . des moyens 21 qui sont reliés par des liaisons 22 et 23 respectivement à ladite unité de commande 9 et auxdits moyens 20 et qui, lorsque ladite phase de vol particulière est déterminée par lesdits moyens 20, engendrent, en fonction de l'ordre de braquage global reçu de l'unité de commande 9, des ordres de braquage individuels différenciés pour lesdits moyens d'actionnement 17, 18, 19.

Dans une première variante de réalisation préférée, lesdits moyens 21 engendrent des ordres de braquage individuels différenciés de manière à commander en priorité l'élément de gouverne qui engendre sur ledit élément stabilisateur 4 l'effort le plus faible. Lesdits moyens 21 sont reliés, à cet effet, par une liaison 24 multiple, auxdits moyens d'actionnement 17, 18, 19.

Selon l'invention, ladite phase de vol particulière de l'aéronef 3, déterminée par les moyens 20, est une phase de vol (cas de vol, centrage, manoeuvre, ...) pour laquelle l'effort Eeff appliqué sur ledit élément stabilisauteur 4 est supérieur à un seuil d'effort Elim qui correspond à un pourcentage prédéterminé, par exemple 90%, d'un effort maximal Emax connu dudit élément stabilisateur 4.

Ainsi, comme grâce à l'invention, on commande (au moins) dans ladite phase de vol particulière l'élément de gouverne permettant d'engendrer l'effort le plus faible sur l'élément stabilisateur 4, on limite les efforts maximaux qui sont appliqués audit élément stabilisateur 4, ce qui permet de réduire le dimensionnement et la masse de ce dernier.

En outre, comme on prévoit au moins deux actionneurs 17, 18, 19 pour déplacer la gouverne 2 (un actionneur 17, 18, 19 par élément de gouverne 14, 15, 16 de ladite gouverne 2), on peut utiliser des actionneurs 17, 18, 19 moins puissants, et donc moins encombrants, moins lourds et surtout moins coûteux.

Dans une seconde variante de réalisation, le système de commande 1 conforme à l'invention commande avec retard un second desdits éléments de gouverne qui engendre un effort sur ledit élément stabilisateur 4 qui est plus élevé que l'effort engendré par un premier élément de gouverne (commandé en premier) pour un même angle de braquage desdits premier et second éléments de gouverne.

Dans un mode de réalisation préféré, on prévoit :
- un premier mode de commande, pour lequel les moyens 21 commandent de manière identique les (au moins) deux éléments de gouverne 14, 15, 16, via lesdits actionneurs 17, 18, 19 ; et
- un second mode de commande, pour lequel les moyens 21 commandent de manière différenciée les (au moins) deux éléments de gouverne 14, 15, 16, via lesdits actionneurs 17, 18, 19.

De plus, lesdits moyens 21 mettent en oeuvre ledit premier mode de commande pendant tout le vol de l'aéronef 3, à l'exception de ladite phase de vol particulière pour laquelle ils mettent en oeuvre ledit second mode de commande.

Ce mode de réalisation préféré permet :
- d'une part, de limiter les efforts appliqués à l'élément stabilisateur 4, en mettant en oeuvre, lorsque cela s'avère nécessaire, ledit second mode de commande, pour lequel on commande prioritairement (c'est-à-dire essentiellement, ou même exclusivement selon les situations), parmi lesdits éléments de gouvernes 14, 15, 16, l'élément de gouverne qui engendre l'effort le plus faible sur ledit élément stabilisateur 4 ; et
- d'autre part, de réduire la fatigue et le vieillissement desdits éléments de gouverne 14, 15, 16, en mettant toujours en oeuvre en fonctionnement normal et habituel (donc hormis la phase de vol particulière précitée et explicitée ci-dessous à partir d'exemples de réalisation particuliers de l'invention) ledit premier mode de commande, pour lequel les éléments de gouverne 14, 15, 16 sont commandés de manière identique, ce qui permet de répartir sur l'ensemble desdits éléments de gouverne 14, 15, 16 les différents efforts et ainsi de réduire la fatigue et l'usure de ces éléments de gouverne 14, 15, 16.

Par ailleurs, lesdits moyens 20 comportent :
- un ensemble de capteurs C1, ..., Cp, p étant un entier, pour mesurer les valeurs de différents paramètres précisés ci-dessous ; et
- une unité de calcul 25 qui est reliée par des liaisons ℓ1, ..., ℓp respectivement auxdits capteurs C1, ..., Cp, pour déterminer, à partir des valeurs mesurées par lesdits capteurs C1, ..., Cp, ladite phase de vol particulière.

On notera que les différents éléments de gouverne 14, 15, 16 d'une gouverne 2 peuvent être agencés de manière à tourner autour d'un seul et même axe Z-Z, comme représenté sur la figure 1. Mais il est bien entendu également possible que chaque élément de gouverne tourne autour d'un axe particulier différent des axes des autres éléments de gouverne.

En outre, selon l'invention, lorsque la gouverne 2 comporte au moins trois éléments de gouverne 14, 15, 16 (comme cela est par exemple représenté sur la figure 2 pour les gouvernes latérales 2D et 2E qui comprennent chacune les trois éléments de gouverne 14D, 15D, 16D et 14E, 15E, 16E, respectivement), tous les types de commande possibles sont envisageables.

On se réfère à présent au mode de réalisation particulier représenté partiellement sur la figure 3, pour lequel l'élément stabilisateur correspondant à la dérive 4A, et la gouverne 2A comporte un élément de gouverne supérieur 14A et un élément de gouverne inférieur 15A, agencés verticalement l'un au-dessus de l'autre.

Dans ce mode de réalisation, il apparaît deux phases de vol particulières, pour lesquelles le système 1 met en oeuvre ledit second mode de commande, c'est-à-dire pour lesquelles les éléments de gouverne 14A, 15A sont commandés de façon différenciée et l'élément de gouverne qui engendre l'effort le plus réduit sur la dérive 4A est commandé en priorité. Le braquage différencié des deux éléments de gouverne 14A, 15A doit permettre de modifier le bras de l'effort résultant sur la dérive 4A et de réduire ainsi le moment de flexion et donc l'enveloppe des charges en flexion. Or, dans ce mode de réalisation, l'élément de gouverne prioritaire n'est pas le même pour les deux phases de vol particulières.

En effet, premièrement, selon l'invention, le système 1 met en oeuvre ledit second mode de commande pour lequel on commande en priorité l'élément de gouverne inférieur 15A (pour diminuer la flexion de la dérive 4A), lorsque le produit Fδ.Fβ est inférieur à zéro, Fδ et Fβ étant les forces aérodynamiques qui sont exercées sur ladite dérive 4A en raison respectivement du braquage de la gouverne et du dérapage. Bien entendu, les moyens 20 comportent deux capteurs Ci et Ci + 1 (non représentés spécifiquement) pour mesurer le dérapage β et le braquage δ, et l'unité de calcul 25 calcule, à partir de ces valeurs, le signe du produit Fδ.Fβ et le compare à zéro, pour déterminer ladite phase de vol particulière.

Deuxièmement, selon l'invention, le système 1 met en oeuvre ledit second mode de commande pour lequel on commande en priorité l'élément de gouverne supérieur 14A, lorsque les deux conditions suivantes sont vérifiées simultanément :
- le produit Fδ.Fβ est supérieur à zéro, Fδ et Fβ étant les forces aérodynamiques qui sont exercées sur ladite dérive 4A en raison respectivement du braquage de la gouverne et du dérapage ; et
- la valeur absolue de l'angle de dérapage est supérieure à une valeur prédéterminée, par exemple à la moitié de la valeur absolue de l'angle de braquage de la gouverne.

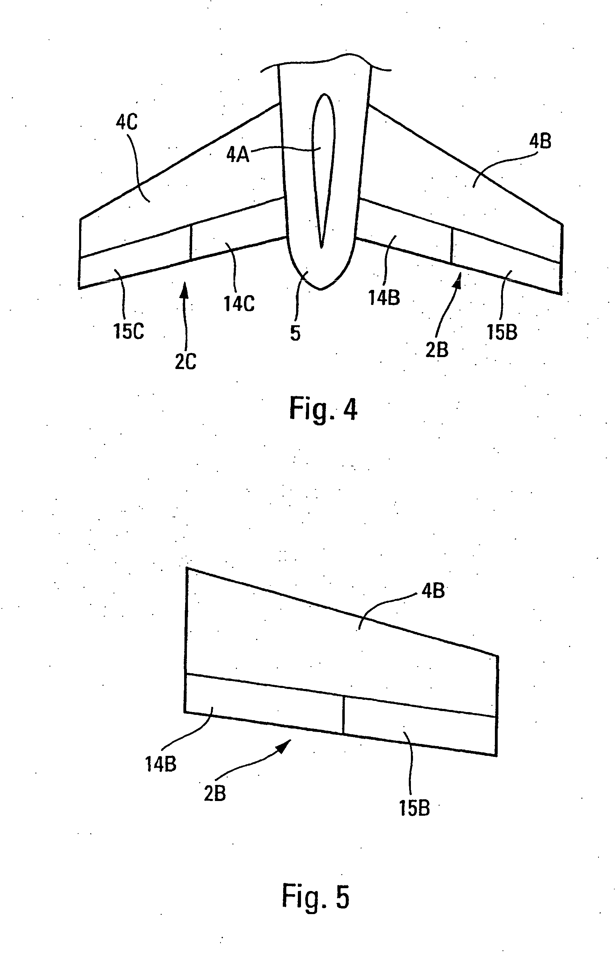

Par ailleurs, le mode de réalisation particulier représenté sur les figures 4 et 5 prévoit, comme élément stabilisateur, le stabilisateur horizontal 4B, et une gouverne 2B comportant deux éléments de gouverne 14B, 15B, à savoir un élément de gouverne interne 14B (par rapport à l'axe longitudinal de l'aéronef 3) et un élément de gouverne externe 15B.

Selon l'invention, ledit système 1 met en oeuvre ledit second mode de commande pour lequel on commande en priorité l'élément de gouverne interne 14B qui engendre l'effort le plus réduit sur ledit stabilisateur horizontal 4B, lorsque l'un des cas A/ et B/ suivants se présente :
A/ l'aéronef 3 est centré vers l'avant et la gouverne 2B est braquée vers le haut ;
B/ l'aéronef 3 est centré vers l'arrière et les conditions suivantes sont simultanément vérifiées :
   a) le sens de braquage souhaité de la gouverne 2B s'oppose au mouvement de l'aéronef 3 ;
   b) la valeur absolue du facteur de charge de l'aéronef 3 est supérieure à une valeur prédéterminée ; et
   c) l'aéronef 3 est en configuration lisse.

Dans une première variante de l'invention, ledit cas A se présente lorsque, en plus des conditions précitées, la condition suivante α est également vérifiée : l'aéronef 3 est en configuration lisse.

Dans une deuxième variante de l'invention, ledit cas A se présente lorsque, en plus des conditions précitées, la condition suivante β est également vérifiée : la vitesse de débattement de l'organe de commande 10 de l'aéronef 3, par exemple un minimanche, est supérieure à une valeur prédéterminée. Cette valeur prédéterminée peut, par exemple, être choisie égale à la moitié de la vitesse maximale de débattement de l'organe de commande 10. L'ajout de cette condition β permet de ne pas impacter le domaine de vol courant de l'aéronef 3 par l'activation du second mode de commande de la gouverne 2B. En effet, une valeur élevée de ladite vitesse de débattement de l'organe de commande 10 correspond généralement à des efforts élevés sur la gouverne 2B, que l'on souhaite réduire par l'activation dudit second mode de commande.

De plus, dans une troisième variante, ledit cas A se présente lorsque, en plus des conditions citées en premier (l'aéronef 3 est centré vers l'avant et la gouverne 2B est braquée vers le haut), les conditions α et β précédentes sont également vérifiées (simultanément).

Par ailleurs, selon l'invention, pour ledit cas B :
- la condition a) est vérifiée, lorsque le signe du produit du facteur de charge vertical et de l'angle de braquage est positif ;
- la condition b) est vérifiée, lorsque le facteur de charge vertical est supérieur à + 1,5 g ou inférieur à -0,5 g, g étant l'accélération de la pesanteur ; et
- la condition c) est vérifiée, lorsqu'aucun dispositif sustentateur usuel, non représenté, de l'aéronef n'est activé.

Les moyens 20 comportent des capteurs appropriés pour mesurer les paramètres précédents.

En outre, on utilise la valeur de l'angle de calage du stabilisateur horizontal 4B (angle formé entre l'axe longitudinal de l'aéronef 3 et ledit stabilisateur horizontal 4B) pour discriminer les cas de "centrage avant" des cas de "centrage arrière". Ce calage, lorsque l'aéronef 3 est en vol stabilisé en palier, est représentatif du centrage de l'aéronef 3. Par exemple, on peut dire que pour des angles de calage inférieurs à -1,5°, on a un centrage avant et, pour des angles de calage supérieurs à -1,5°, on a un centrage arrière. Le signe de cet angle est tel que, pour un stabilisateur horizontal 4B dont la partie avant est dirigée vers le bas, l'angle de calage est négatif, et si la partie avant est dirigée vers le haut, l'angle de calage est positif. Lors d'un centrage avant, le centre de gravité de l'aéronef 3 est situé vers l'avant de l'aéronef 3 alors que, lors d'un centrage arrière, le centre de gravité de l'aéronef 3 est situé vers l'arrière de cet aéronef 3.

On notera que l'utilisation de l'élément de gouverne interne 14B permet de diminuer le bras de levier appliqué à l'effort aérodynamique subi pour le stabilisateur horizontal 4B et ainsi diminuer le moment de flexion.

Par ailleurs, on applique des filtrages aux commandes desdits éléments de gouverne 14, 15, 16 et on applique des filtrages différents aux commandes respectivement desdits différents éléments de gouverne 14, 15, 16.

## Revendications

1. Procédé de commande d'une gouverne (2) d'un aéronef (3), qui est montée sur un élément stabilisateur (4) dudit aéronef (3), ladite gouverne (2) comportant au moins deux éléments de gouverne commandables (14, 15, 16), chacun desdits éléments de gouverne (14, 15, 16) étant monté rotatif autour d'un axe (Z-Z) pour pouvoir prendre n'importe quel angle de braquage à l'intérieur d'une plage de débattement, conformément à une commande, et lesdits éléments de gouverne (14, 15, 16) étant susceptibles d'être commandés de façon différenciée,
**caractérisé en ce que**, pour au moins une phase de vol particulière de l'aéronef (3), on commande en priorité un premier desdits éléments de gouverne (14, 15, 16) qui engendre un effort sur ledit élément stabilisateur (4) qui est plus faible que l'effort engendré par le second élément de gouverne pour un même angle de braquage desdits premier et second éléments de gouverne.

2. Procédé selon la revendication 1,
**caractérisé en ce que** ladite phase de vol particulière de l'aéronef (3) est une phase de vol pour laquelle l'effort appliqué sur ledit élément stabilisateur (4) est supérieur à un seuil d'effort qui correspond à un pourcentage prédéterminé d'un effort maximal dudit élément stabilisateur (4).

3. Procédé selon l'une des revendications 1 à 2,
**caractérisé en ce que** l'on définit :
- un premier mode de commande, pour lequel on commande de manière identique les deux éléments de gouverne (14, 15, 16) ; et
- un second mode de commande, pour lequel on commande de manière différenciée les deux éléments de gouverne (14, 15, 16),
et **en ce que**, pendant tout le vol de l'aéronef (3), on met en oeuvre ledit premier mode de commande, à l'exception de ladite phase de vol particulière pour laquelle on met en oeuvre ledit second mode de commande.

4. Procédé selon la revendication 1,
**caractérisé en ce que** l'on commande avec retard un second desdits éléments de gouverne (14, 15, 16) qui engendre un effort sur ledit élément stabilisateur (4) qui est plus élevé que l'effort engendré par un premier élément de gouverne pour un même angle de braquage desdits premier et second éléments de gouverne.

5. Procédé selon la revendication 3,
**caractérisé en ce que**, pour un élément stabilisateur correspondant à un stabilisateur horizontal (4B), et une gouverne (2B) comportant au moins un élément de gouverne interne (14B) et un élément de gouverne externe (15B), on met en oeuvre ledit second mode de commande pour lequel on commande en priorité ledit élément de gouverne interne (14B), lorsque l'un des cas suivants A et B se présente :
A/ l'aéronef (3) est centré vers l'avant et la gouverne (2B) est braquée vers le haut ;
B/ l'aéronef (3) est centré vers l'arrière et les conditions suivantes sont vérifiées simultanément :
a) le sens de braquage souhaité de la gouverne (2B) s'oppose au mouvement de l'aéronef (3) ;
b) la valeur absolue du facteur de charge de l'aéronef (3) est supérieure à une valeur prédéterminée ; et
c) l'aéronef (3) est en configuration lisse.

6. Procédé selon la revendication 5,
**caractérisé en ce que** ledit cas A se présente lorsque la condition suivante est de plus vérifiée : l'aéronef (3) est en configuration lisse.

7. Procédé selon l'une des revendications 5 et 6,
**caractérisé en ce que** ledit cas A se présente lorsque la condition suivante est de plus vérifiée : la vitesse de débattement d'un organe de commande (10) de l'aéronef (3) est supérieure à une valeur prédéterminée.

8. Procédé selon l'une des revendications 5 à 7,
**caractérisé en ce que** ladite condition a) est vérifiée, lorsque le signe du produit du facteur de charge vertical et de l'angle de braquage est positif.

9. Procédé selon l'une des revendications 5 à 8,
**caractérisé en ce que** ladite condition b) est vérifiée, lorsque le facteur de charge vertical vérifie l'une des conditions suivantes :
- être supérieur à + 1,5 g,
- être inférieur à -0,5 g,
g étant l'accélération de la pesanteur.

10. Procédé selon l'une des revendications 5 à 9,
**caractérisé en ce que** ladite condition c) est vérifiée, lorsqu'aucun dispositif sustentateur de l'aéronef (3) n'est activé.

11. Procédé selon la revendication 3,
**caractérisé en ce que**, pour un élément stabilisateur correspondant à une dérive (4A), et une gouverne (2A) comportant au moins un élément de gouverne supérieur (14A) et un élément de gouverne inférieur (15A), on met en oeuvre ledit second mode de commande pour lequel on commande en priorité ledit élément de gouverne inférieur (15A), lorsque le produit Fδ.Fβ est inférieur à zéro, Fδ et Fβ étant les forces aérodynamiques qui sont exercées sur ladite dérive (4A) en raison respectivement du braquage de la gouverne (2A) et du dérapage.

12. Procédé selon l'une des revendications 3 et 11,
**caractérisé en ce que**, pour un élément stabilisateur correspondant à une dérive (4A), et une gouverne (2A) comportant au moins un élément de gouverne supérieur (14A) et un élément de gouverne inférieur (15A), on met en oeuvre ledit second mode de commande pour lequel on commande en priorité l'élément de gouverne supérieur (14A), lorsque les deux conditions suivantes sont vérifiées simultanément :
- le produit Fδ.Fβ est supérieur à zéro, Fδ et Fβ étant les forces aérodynamiques qui sont exercées sur ladite dérive (4A) en raison respectivement du braquage de la gouverne (2A) et du dérapage ; et
- la valeur absolue de l'angle de dérapage est supérieure à une valeur prédéterminée.

13. Procédé selon l'une quelconque des revendications précédentes,
**caractérisé en ce que** l'on réalise ladite gouverne (2) sous forme d'au moins trois éléments de gouverne commandables (14, 15, 16) et **en ce que** l'on commande lesdits éléments de gouverne (14, 15, 16) par groupes de priorité, chacun desdits groupes de priorité comportant à chaque fois au moins un élément de gouverne.

14. Procédé selon l'une quelconque des revendications précédentes,
**caractérisé en ce que** l'on applique des filtrages aux commandes desdits éléments de gouverne (14, 15, 16), et **en ce que** l'on applique des filtrages différents aux commandes respectivement desdits différents éléments de gouverne (14, 15, 16).

15. Système de commande électrique d'une gouverne d'aéronef, comportant :
- une unité de commande (9) qui comprend au moins un organe de commande (10) susceptible d'être actionné par un pilote et qui délivre un ordre de braquage global représentatif au moins de l'action exercée par le pilote sur ledit organe de commande (10) ;
- un actionneur (13) qui déplace ladite gouverne (2) en fonction d'un ordre de braquage reçu, ladite gouverne (2) comportant au moins deux éléments de gouverne (14, 15, 16), chacun desdits éléments de gouverne (14, 15, 16) étant monté rotatif autour d'un axe (Z-Z) pour pouvoir prendre n'importe quel angle de braquage à l'intérieur d'une plage de débattement ; et
- des premiers moyens (20) pour déterminer une phase de vol particulière de l'aéronef,
**caractérisé en ce que** :
- ledit actionneur (13) comporte au moins deux moyens d'actionnement (17, 18, 19), chacun desdits moyens d'actionnement (17, 18, 19) étant associé à l'un desdits éléments de gouverne (14, 15, 16) et étant susceptible de déplacer ledit élément de gouverne associé (14, 15, 16) en fonction d'un ordre de braquage individuel reçu ; et
- ledit système (1) comporte de plus des seconds moyens (21) qui sont agencés entre ladite unité de commande (9) et lesdits moyens d'actionnement (17, 18, 19) et qui, lorsque ladite phase de vol particulière est déterminée par lesdits premiers moyens (20), engendrent, en fonction de l'ordre de braquage global reçu de l'unité de commande (9), des ordres de braquage individuels différenciés pour lesdits moyens d'actionnement (17,18, 19) de manière à commander en priorité un premier desdits éléments de gouverne (14, 15, 16) qui engendre un effort sur ledit élément stabilisateur (4) qui est plus faible que l'effort engendré par le second élément de gouverne pour un même angle de braquage desdits premier et second éléments de gouverne.

16. Système selon la revendication 15,
**caractérisé en ce que** lesdits premiers moyens (20) comportent des capteurs (C1, Cp) pour mesurer les valeurs de différents paramètres et une unité de calcul (25) pour déterminer, à partir des valeurs mesurées par lesdits capteurs (C1, Cp), ladite phase de vol particulière.

17. Aéronef,
**caractérisé en ce qu'**il comporte un système de commande (1) tel que celui spécifié sous l'une des revendications 15 et 16.

## Patentansprüche

1. Verfahren zum Ansteuern einer Steuerfläche (2) eines Flugzeugs (3), die an einem Stabilisierungselement (4) des Flugzeugs (3) angebracht ist, wobei die Steuerfläche (2) wenigstens zwei ansteuerbare Ruderelemente (14, 15, 16) aufweist, wobei jedes der Ruderelemente (14, 15, 16) um eine Achse (Z-Z) drehbar angebracht ist, um entsprechend einem Befehl einen beliebigen Ausschlagwinkel innerhalb eines Ausschlagbereichs einnehmen zu können, und wobei die Ruderelemente (14, 15, 16) geeignet sind, auf unterschiedliche Weise angesteuert zu werden,
**dadurch gekennzeichnet, dass** man für wenigstens eine besondere Flugphase des Flugzeugs (3) prioritär ein erstes der Ruderelemente (14, 15, 16) ansteuert, das eine Belastung an dem Stabilisierungselement (4) erzeugt, die geringer ist als die Belastung, die bei gleichem Ausschlagwinkel des ersten und des zweiten Ruderelements von dem zweiten Ruderelement erzeugt wird.

2. Verfahren nach Anspruch 1,
**dadurch gekennzeichnet, dass** die besondere Flugphase des Flugzeugs (3) eine Flugphase ist, in der die auf das Stabilisierungselement (4) einwirkende Belastung größer ist als ein Belastungsgrenzwert, der einem vorherbestimmten Prozentsatz einer maximalen Belastung des Stabilisierungselements (4) entspricht.

3. Verfahren nach einem der Ansprüche 1 bis 2,
**dadurch gekennzeichnet, dass** man Folgendes definiert:
- einen ersten Steuermodus, in dem man die beiden Ruderelemente (14, 15, 16) auf gleiche Weise ansteuert; und
- einen zweiten Steuermodus, in dem man die beiden Ruderelemente (14, 15, 16) auf unterschiedliche Weise ansteuert,
und dass man für die Dauer des gesamten Flugs des Flugzeugs (3) in den ersten Steuermodus schaltet, außer in der besonderen Flugphase, in der man in den zweiten Steuermodus schaltet.

4. Verfahren nach Anspruch 1,
**dadurch gekennzeichnet, dass** man ein zweites der Ruderelemente (14, 15, 16), das eine Belastung an dem Stabilisierungselement (4) erzeugt, die größer ist als die Belastung, die bei gleichem Ausschlagwinkel des ersten und des zweiten Ruderelements von einem ersten Ruderelement erzeugt wird, zeitverzögert ansteuert.

5. Verfahren nach Anspruch 3,
**dadurch gekennzeichnet, dass** man bei einem Stabilisierungselement, das einem Höhenleitwerk (4B) entspricht, und einer Steuerfläche (2B), die wenigstens ein innen angeordnetes Ruderelement (14B) und ein außen angeordnetes Ruderelement (15B) aufweist, dann in den zweiten Steuermodus schaltet, in dem man prioritär das innen angeordnete Ruderelement (14B) ansteuert, wenn einer der folgenden Fälle A und B vorliegt:
A/ der Schwerpunkt des Flugzeugs (3) ist nach vorne verlagert und das Ruder (2B) ist nach oben ausgelenkt;
B/ der Schwerpunkt des Flugzeugs (3) ist nach hinten verlagert und die folgenden Bedingungen sind gleichzeitig erfüllt:
a) die gewünschte Ausschlagrichtung der Steuerfläche (2B) ist der Bewegung des Flugzeugs (3) entgegengerichtet;
b) der Absolutwert des Lastvielfachen des Flugzeugs (3) ist größer als ein vorherbestimmter Wert; und
c) das Fahrwerk und die Klappen des Flugzeugs (3) sind eingefahren.

6. Verfahren nach Anspruch 5,
**dadurch gekennzeichnet, dass** der Fall A dann vorliegt, wenn zusätzlich die folgende Bedingung erfüllt ist: das Fahrwerk und die Klappen des Flugzeugs (3) sind eingefahren.

7. Verfahren nach einem der Ansprüche 5 und 6,
**dadurch gekennzeichnet, dass** der Fall A dann vorliegt, wenn zusätzlich die folgende Bedingung erfüllt ist: die Ausschlaggeschwindigkeit eines Steuerorgans (10) des Flugzeugs (3) ist größer als ein vorherbestimmter Wert.

8. Verfahren nach einem der Ansprüche 5 bis 7,
**dadurch gekennzeichnet, dass** die Bedingung a) erfüllt ist, wenn das Vorzeichen des Produkts aus dem vertikalen Lastvielfachen und dem Ausschlagwinkel positiv ist.

9. Verfahren nach einem der Ansprüche 5 bis 8,
**dadurch gekennzeichnet, dass** die Bedingung b) erfüllt ist, wenn das vertikale Lastvielfache eine der folgenden Bedingungen erfüllt:
- es ist größer als + 1,5 g,
- es ist kleiner als -0,5 g,
wobei g die Erdbeschleunigung ist.

10. Verfahren nach einem der Ansprüche 5 bis 9,
**dadurch gekennzeichnet, dass** die Bedingung c) erfüllt ist, wenn keine Auftriebsvorrichtung des Flugzeugs (3) aktiviert ist.

11. Verfahren nach Anspruch 3,
**dadurch gekennzeichnet, dass** man bei einem Stabilisierungselement, das einem Seitenleitwerk (4A) entspricht, und einer Steuerfläche (2A), die wenigstens ein oberes Ruderelement (14A) und ein unteres Ruderelement (15A) aufweist, dann in den zweiten Steuermodus schaltet, in dem man prioritär das untere Ruderelement (15A) ansteuert, wenn das Produkt Fδ.Fβ kleiner ist als null, wobei Fδ und Fβ die aerodynamischen Kräfte sind, die durch den Ausschlag der Steuerfläche (2A) beziehungsweise das Schieben auf das Seitenleitwerk (4A) ausgeübt werden.

12. Verfahren nach einem der Ansprüche 3 und 11,
**dadurch gekennzeichnet, dass** man bei einem Stabilisierungselement, das einem Seitenleitwerk (4A) entspricht, und einer Steuerfläche (2A), die wenigstens ein oberes Ruderelement (14A) und ein unteres Ruderelement (15A) aufweist, dann in den zweiten Steuermodus schaltet, in dem man prioritär das obere Ruderelement (14A) ansteuert, wenn die beiden folgenden Bedingungen gleichzeitig erfüllt sind:
- das Produkt Fδ.Fβ ist größer als null, wobei Fδ und Fβ die aerodynamischen Kräfte sind, die durch den Ausschlag der Steuerfläche (2A) beziehungsweise das Schieben auf das Seitenleitwerk (4A) ausgeübt werden; und
- der Absolutwert des Schiebewinkels ist größer als ein vorherbestimmter Wert.

13. Verfahren nach einem der vorhergehenden Ansprüche,
**dadurch gekennzeichnet, dass** man die Steuerfläche (2) in Form von wenigstens drei ansteuerbaren Ruderelementen (14, 15, 16) ausführt, und dass man die Ruderelemente (14, 15, 16) nach Prioritätsgruppen ansteuert, wobei jede der Prioritätsgruppen jeweils wenigstens ein Ruderelement aufweist.

14. Verfahren nach einem der vorhergehenden Ansprüche,
**dadurch gekennzeichnet, dass** man die Befehle der Ruderelemente (14, 15, 16) filtert, und dass man für die Befehle der verschiedenen Ruderelemente jeweils unterschiedliche Filterungen verwendet.

15. Elektrische Steuervorrichtung für Flugzeugruder, aufweisend:
- eine Steuereinheit (9), die wenigstens ein Steuerorgan (10) umfasst, das geeignet ist, von einem Piloten betätigt zu werden, und das einen globalen Ausschlagbefehl liefert, der wenigstens eine Betätigung des Steuerorgans (10) durch den Piloten repräsentiert;
- einen Stellantrieb (13), der die Steuerfläche (2) entsprechend einem empfangenen Ausschlagbefehl auslenkt, wobei die Steuerfläche (2) wenigstens zwei Ruderelemente (14, 15, 16) aufweist, wobei jedes der Ruderelemente (14, 15, 16) um eine Achse (Z-Z) drehbar angebracht ist, um einen beliebigen Ausschlagwinkel innerhalb eines Ausschlagbereichs einnehmen zu können; und
- erste Mittel (20), um eine besondere Flugphase des Flugzeugs zu ermitteln,
**dadurch gekennzeichnet, dass**:
- der Stellantrieb (13) wenigstens zwei Betätigungsmittel (17, 18, 19) aufweist, wobei jedes der Betätigungsmittel (17, 18, 19) mit einem der Ruderelemente (14, 15, 16) verbunden ist und geeignet ist, das zugehörige Ruderelement (14, 15, 16) entsprechend einem individuellen empfangenen Ausschlagbefehl auszulenken; und
- die Vorrichtung (1) femer zweite Mittel (21) aufweist, die zwischen der Steuereinheit (9) und den Betätigungsmitteln (17, 18, 19) angeordnet sind, und die, wenn von den ersten Mitteln (20) die besondere Flugphase ermittelt wird, entsprechend dem globalen, von der Steuereinheit (9) empfangenen Ausschlagbefehl individuelle differenzierte Ausschlagbefehle für die Betätigungsmittel (17, 18, 19) erzeugen, so dass prioritär ein erstes der Ruderelemente (14, 15, 16) angesteuert wird, das eine Belastung an dem Stabilisierungselement (4) erzeugt, die geringer ist als die Belastung, die bei gleichem Ausschlagwinkel des ersten und des zweiten Ruderelements von dem zweiten Ruderelement erzeugt wird.

16. Vorrichtung nach Anspruch 15,
**dadurch gekennzeichnet, dass** die ersten Mittel (20) Messfühler (C1, Cp) aufweisen, um die Werte der verschiedenen Parameter zu messen, und eine Rechnereinheit (25), um anhand der von den Messfühlern (C1, Cp) gemessenen Werte die besondere Flugphase zu ermitteln.

17. Flugzeug,
**dadurch gekennzeichnet, dass** es eine Steuervorrichtung (1) der Art aufweist, wie sie unter einem der Ansprüche 15 und 16 beschrieben wird.

## Claims

1. Method for controlling a control surface (2) of an aircraft (3), which control surface is mounted on a stabilizer element (4) of said aircraft (3), said control surface (2) comprising at least two controllable control surface elements (14, 15, 16), each of said control surface elements (14, 15, 16) being mounted so that it can rotate about an axis (Z-Z) so that it can adopt any turn angle within a range of travel, in accordance with a control command, and said control surface elements (14, 15, 16) being able to be controlled differentially,
**characterized in that**, for at least one particular phase of flight of the aircraft (3), a first of said control surface elements (14, 15, 16) is controlled as a priority and generates a force on said stabilizer element (4) which is lower than the force generated by the second control surface element for the same turn angle of said first and second control surface elements.

2. Method according to Claim 1,
**characterized in that** said particular phase of flight of the aircraft (3) is a phase of flight for which the force applied to said stabilizer element (4) is above a force threshold corresponding to a predetermined percentage of a maximum force on said stabilizer element (4).

3. Method according to either of Claims 1 and 2,
**characterized in that** there are defined:
- a first control mode, for which the two control surface elements (14, 15, 16) are controlled identically; and
- a second control mode, for which the two control surface elements (14, 15, 16) are controlled differentially,
and **in that**, throughout the flight of the aircraft (3), said first control mode is used except in said particular phase of flight, for which said second control mode is used.

4. Method according to Claim 1,
**characterized in that** a second of said control surface elements (14, 15, 16) is controlled with a delay and generates a force on said stabilizer element (4) which is higher than the force generated by a first control surface element for the same turn angle of said first and second control surface elements.

5. Method according to Claim 3,
**characterized in that** for a stabilizer element corresponding to a horizontal stabilizer (4B), and a control surface (2B) comprising at least one inboard control surface element (14B) and one outboard control surface element (15B), said second control mode is used, for which said inboard control surface element (14B) is controlled as a priority when one of the following cases A and B arises:
A/the aircraft (3) is centred toward the front and the control surface (2B) is turned upward;
B/ the aircraft (3) is centred toward the rear and the following conditions are simultaneously satisfied:
a) the desired direction of turn of the control surface (2B) opposes the movement of the aircraft (3);
b) the absolute value of the load factor on the aircraft (3) is above a predetermined value; and
c) the aircraft (3) is in a clean configuration.

6. Method according to Claim 5,
**characterized in that** said case A arises when the following condition is also satisfied: the aircraft (3) is in a clean configuration.

7. Method according to either of Claims 5 and 6,
**characterized in that** said case A arises when the following condition is also satisfied: the rate of travel of a control (10) of the aircraft (3) is greater than a predetermined value.

8. Method according to one of Claims 5 to 7,
**characterized in that** said condition a) is satisfied when the sign of the product of the vertical load factor and of the turn angle is positive.

9. Method according to one of Claims 5 to 8,
**characterized in that** said condition b) is satisfied when the vertical load factor satisfies one of the following conditions:
- it is greater than +1.5g
- it is less than -0.5g,
g being the acceleration due to gravity.

10. Method according to one of Claims 5 to 9,
**characterized in that** said condition c) is satisfied when no lift-enhancing device of the aircraft (3) is activated.

11. Method according to Claim 3,
**characterized in that**, for a stabilizer element corresponding to a fin (4A), and a control surface (2A) comprising at least one upper control surface element (14A) and one lower control surface element (15A), said second control mode is used, for which said lower control surface element (15A) is controlled as a priority when the product Fδ.Fβ is less than zero, Fδ and Fβ being the aerodynamic forces exerted on said fin (4A) as a result of the turning of the control surface (2A) and of the yaw, respectively.

12. Method according to either of Claims 3 and 11,
**characterized in that**, for a stabilizer element corresponding to a fin (4A), and a control surface (2A) comprising at least one upper control surface element (14A) and one lower control surface element (15A), said second control mode is used, for which the upper control surface element (14A) is controlled as a priority when the following two conditions are simultaneously satisfied:
- the product Fδ. Fβ is greater than zero, Fδ and Fβ being the aerodynamic forces exerted on said fin (4A) as a result of the turning of the control surface (2A) and of the yaw, respectively; and
- the absolute value of the yaw angle is greater than a predetermined value.

13. Method according to any one of the preceding claims,
**characterized in that** said control surface (2) is produced in the form of at least three controllable control surface elements (14, 15, 16) and **in that** said control surface elements (14, 15, 16) are controlled in priority groups, each of said priority groups comprising, in each instance, at least one control surface element.

14. Method according to any one of the preceding claims,
**characterized in that** filtering is applied to the control commands for said control surface elements (14, 15, 16), and **in that** different filtering is applied to the respective control commands for said various control surface elements (14, 15, 16).

15. System for electrically controlling an aircraft control surface, comprising:
- a control unit (9) which comprises at least one control (10) able to be actuated by a pilot and which delivers an overall turn command representing at least the action exerted by the pilot on said control (10); and
- an actuator (13) which moves said control surface (2) according to a turn command received, said control surface (2) comprising at least two control surface elements (14, 15, 16), each of said control surface elements (14, 15, 16) being mounted to rotate about an axis (Z-Z) so as to be able to adopt any turn angle within a range of travel; and
- first means (20) for determining a particular phase of flight of the aircraft;
**characterized in that**:
- said actuator (13) comprises at least two actuating means (17, 18, 19), each of said actuating means (17, 18, 19) being associated with one of said control surface elements (14, 15, 16) and being able to move said associated control surface element (14, 15, 16) according to an individual turn command received; and
- said system (1) additionally comprises second means (21) which are arranged between said control unit (9) and said actuating means (17, 18, 19) and which, when said particular phase of flight is determined by said first means (20), generate, according to the overall turn command received from the control unit (9), differentiated individual turn commands for said actuating means (17, 18, 19) so as to control, as a matter of priority, a first of said control surface elements (14, 15, 16) that generates a force on said stabilizer element (4) which is lower than the force generated by the second control surface element for a same turn angle of said first and second control surface elements.

16. System according to Claim 15,
**characterized in that** said first means (20) comprise sensors (C1, Cp) for measuring the values of various parameters and a calculation unit (25) for determining said particular phase of flight from the values measured by said sensors (C1, Cp).

17. Aircraft,
**characterized in that** it comprises a control system (1) like the one specified in either of Claims 15 and 16.
